Europäisches Patentamt

(19) European Patent Office

Office européen des brevets

(11) Veröffentlichungsnummer: **0 170 617**
A2

## (12) EUROPÄISCHE PATENTANMELDUNG

(21) Anmeldenummer: 85810301.3

(22) Anmeldetag: 01.07.85

(51) Int. Cl.⁴: **G 02 B 17/08**

(30) Priorität: 02.07.84 CH 3167/84

(43) Veröffentlichungstag der Anmeldung:
05.02.86 Patentblatt 86/6

(84) Benannte Vertragsstaaten:
AT DE FR GB IT NL SE

(71) Anmelder: Canzek, Ludvik, Dr.
Quellmattstrasse 3
CH-5035 Unterentfelden(CH)

(72) Erfinder: Canzek, Ludvik, Dr.
Quellmattstrasse 3
CH-5035 Unterentfelden(CH)

(54) **Katadioptrisches objektiv.**

(57) Das fokale katadioptrische Objektiv mit Oeffnungsverhältnis von mindestens 1:1.2 umfasst eine Front-, eine Hauptspiegel-, eine Gegenspiegellinse und ein Feldlinsensystem. Der bildseitige Brennpunkt kann innerhalb oder ausserhalb des Objektivs liegen. Bei den 4 Ausführungsbeispielen sind bis auf eine Feldlinse alle optischen Elemente aus gleicher Glasart (BK7), um das sekundäre Spektrum zu vermeiden und somit die Objective in einem sehr breiten Spektralbereich anwenden zu können . Weil die Objektive kurz gebaut sind, die Front- und die Hauptspiegellinse ausgebohrt werden können, sind die Objektive leicht und handlich. Der einfache Aufbau sichert einen günstigen Herstellungspreis.

Obwohl alle Flächen sphärisch sind, kann man Objektive nach dieser Erfindung fast ideal korrigieren. Aus dieser Sicht kann man sie überall dort einsetzen, wo bezüglich Leistung höchste Anforderungen gestellt werden. Sie eignen sich z. B. für Nachtsichtgeräte und nach einer Umrechnung auf entsprechendes Linsenmaterial auch für Wärmebildgeräte.

FIG. 2

0170617

## KATADIOPTRISCHES OBJEKTIV

Die Erfindung bezieht sich auf fokale katadioptrische Objektive gemäss Oberbegriff des Patentanspruchs 1.

Objektive dieser Art sind bekannt. Sie sind in der CH-A-542454 angegeben. Sie haben aber eine relativ grosse Baulänge, die mehr als 0.75f (f ist Objektivbrennweite) beträgt und dadurch ein hohes Gewicht. Der bildseitige Brennpunkt liegt immer nur im Objektivinneren, was die Anwendung von solchen Objektiven sehr einschränkt oder gar verunmöglicht. So kann man z.B. in opto-elektronischen Geräten, die ein kurzbrennweitiges Objektiv brauchen, diese bekannten Objektive nicht einsetzen, weil der Durchmesser der Ausbohrung in der Hauptspiegellinse zu klein ist, um eine elektronische Röhre an den Bildort im Objektiv stellen zu können.

Derartige Objektive mit dem bildseitigen Brennpunkt nur ausserhalb des Objektivs sind in der EP-B-50584 beschrieben. Ihre Anwendung z.B. in Geräten, die eine lange Brennweite verlangen, führt zu grosser Baulänge und dadurch zu hohem Gewicht, weil sich der bildseitige Brennpunkt nicht im Objektivinneren befinden kann, wo man in solchem Fall eine elektronische Röhre anbringen möchte, um die Gerätebaulänge zu verkürzen. Auffallend bei einigen Ausführungsbeispielen dieses Objektivs ist ein aufwendiges Feldlinsensystem, was das Gewicht und Preis erhöht.

Die Baulänge und die Lage des bildseitigen Brennpunktes wirken bei den bekannten Objektiven nachteilig, weil sowohl das Gewicht als auch die Unhandlichkeit des Objektivs ungünstig erhöht werden. Es ist noch zu berücksichtigen, dass die Baulänge proportional der Brennweite ist und dass Objektive dieser Art mehrheitlich lange Brennweiten haben.

Der Erfindung liegt die Aufgabe zugrunde, fokale katadioptrische Objektive zu schaffen, bei denen der bildseitige Brennpunkt sowohl innerhalb als auch ausserhalb des Objektivs liegen kann, die eine kurze Baulänge und somit ein niedriges Gewicht, einen einfachen Aufbau und somit niedrige Herstellungskosten aufweisen, jedoch gleichzeitig die Abbildungsqualität von bekannten Objektiven gleicher Leistung erreichen können.

Erfindungsgemäss wird diese Aufgabe durch die im Patentanspruch 1 gekennzeichneten Massnahmen gelöst.

Vorteilhafte Ausführungsformen der fokalen katadioptrischen Objektive sind in den Ansprüchen 2 bis 8 beschrieben.

Die Erfindung wird nachfolgend anhand von 4 Zeichnungen und 4 Ausführungsbeispielen, die in den Tabellen der Patentansprüche 5 bis 8 angegeben sind, näher erklärt.

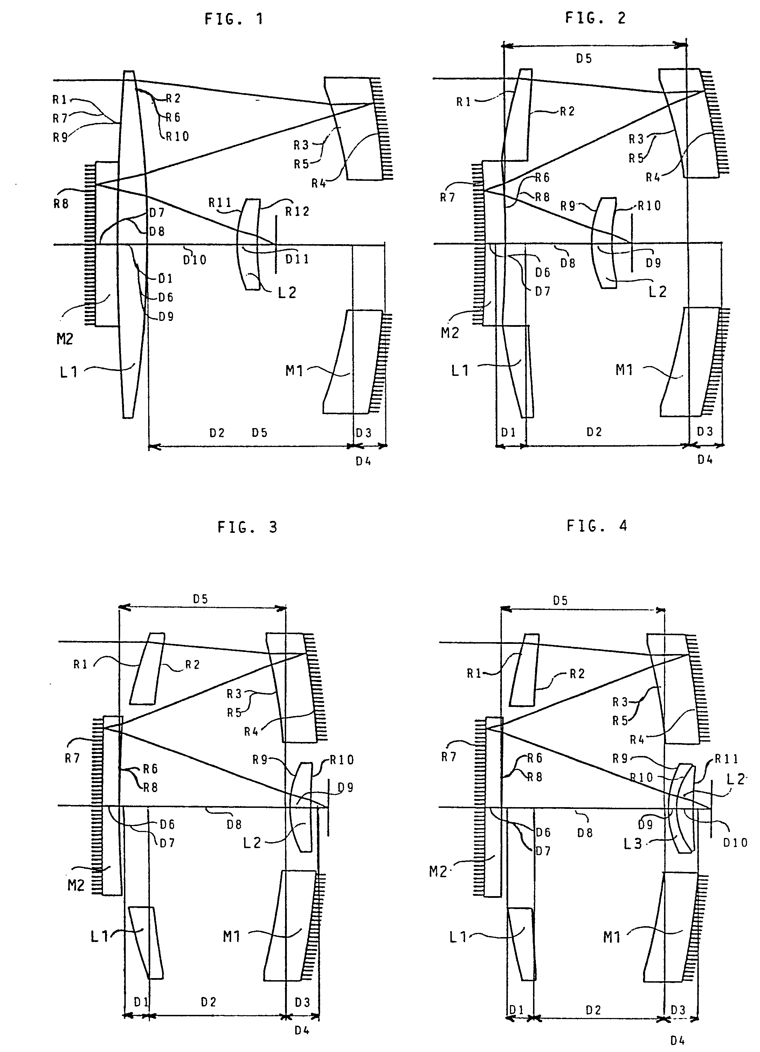

Die Ausführungen des erfindungsgemässen Objektivs nach dem Patentanspruch 1 mit dem Brennpunkt im Objektivinneren sind in den Fig. 1 und 2 dargestellt und in den Patentansprüchen 5 und 6 tabelliert. Gegenüber dem Stand der Technik weisen sie eine bis ca. 32% kürzere Baulänge auf, sie sind einfach gebaut, sie besitzen jeweils nur eine einzige Feldlinse.

Die Ausführungen nach dem gleichen Patentanspruch aber mit dem Brennpunkt ausserhalb des Objektivs, sind in den Fig. 3 und 4 und in den Patentansprüchen 7 und 8 tabelliert. Sie sind einfach gebaut, das Feldlinsensystem beinhaltet eine bis höchstens 2 Linsen. Auch die Baulänge ist kürzer als bei den bekannten Objektiven gleicher Lichtstärke.

Objektive nach dieser Erfindung haben bis auf eine Feldlinse alle optischen Elemente aus der gleichen Glasart, womit eine gute Korrektur des Sekundärspektrums gewährleistet ist. Objektive nach dieser Erfindung könmnen auch aus Materialien für einen ausservisuellen Spektralbereich hergestellt werden.

Die gute Abbildungsqualität, die mit den Objektiven nach dieser Erfindung erreichbar ist, gestattet das Oeffnungsverhältnis über 1:1.2 zu erhöhen und die Brennweite über f = 100 wesentlich zu vergrössern, ohne dabei die Bildgüte merklich zu verschlechtern.

PATENTANSPRUECHE

1. Fokales katadioptrisches Objektiv mit der Brennweite f, das eine Frontlinse, eine Hauptspiegellinse, einen Gegenspiegel und ein sammelndes Feldlinsensystem umfasst, wobei der Gegenspiegel vor der Frontlinse angebracht ist, dadurch gekennzeichnet, dass der bildseitige Brennpunkt sowohl innerhalb als auch ausserhalb des Objektivs liegen kann, wozu im Falle mehrerer Feldlinsenelemente eine Sammellinse im Feldlinsensystem bildseitig angeordnet ist.

2. Objektiv nach dem Patentanspruch 1, dadurch gekennzeichnet, dass der Abstand D2 zwischen der Frontlinse und der Hauptspiegellinse der Beziehung

$$D2 \leqq 0.6f$$

genügt.

3. Objektiv nach dem Patentanspruch 1, dadurch gekennzeichnet, dass die Frontlinse und die Hauptspiegellinse aus Gläsern gleicher Art bestehen.

4. Objektiv nach dem Patentanpruch 1, dadurch gekennzeichnet, dass die optischen Elemente aus Materialien bestehen, welche ausserhalb des visuellen Spektrums lichtdurchlässig sind.

5. Objektiv nach dem Patentanspruch 1, gekennzeichnet durch folgende auf Brennweite f = 100 und Wellenlänge 650 nm bezogene Daten:

| Fläche Nr. | Radius | Abstand | Glasart | |
|------------|--------|---------|---------|--------|
| 1 | 568.867 | 7.2 | BK7 | |
| 2 | -254.664 | 50 | | |
| 3 | -110.190 | 8 | BK7 | |
| 4 | -208.465 | -8 | BK7 | Spiegel |
| 5 | -110.190 | -50 | | |
| 6 | -254.664 | -7.2 | BK7 | |
| 7 | 568.867 | -5.3 | BK7 | |
| 8 | -4314.185 | 5.3 | BK7 | Spiegel |
| 9 | 568.867 | 7.2 | BK7 | |
| 10 | -254.664 | 22 | | |
| 11 | 27.146 | 5 | BK7 | |
| 12 | 72.235 | 4.599 | | |

6. Objektiv nach dem Patentanspruch 1, gekennzeichnet durch folgende auf Brennweite f = 100 und Wellenlänge 650 nm bezogene Daten:

| Fläche Nr. | Radius | Abstand | Glasart | |
|------------|--------|---------|---------|--------|
| 1 | 149.028 | 7.2 | BK7 | |
| 2 | 501.081 | 40 | | |
| 3 | -113.074 | 8 | BK7 | |
| 4 | -169.582 | -8 | BK7 | Spiegel |
| 5 | -113.074 | -45 | | |
| 6 | -225.384 | -5 | BK7 | |
| 7 | -291.261 | 5 | BK7 | Spiegel |
| 8 | -225.384 | 21 | | |
| 9 | 25.416 | 5 | BK7 | |
| 10 | 39.001 | 5.060 | | |

7. objektiv nach dem Patentanspruch 1, gekennzeichnet durch folgende auf Brennweite f = 100 und Wellenlänge 650 nm bezogene Daten:

| Fläche Nr. | Radius | Abstand | Glasart | |
|---|---|---|---|---|
| 1 | 120.807 | 7.2 | BK7 | |
| 2 | 217.458 | 34 | | |
| 3 | -166.110 | 8 | BK7 | |
| 4 | -218.850 | -8 | BK7 | Spiegel |
| 5 | -166.110 | -41 | | |
| 6 | 300.788 | -4 | BK7 | |
| 7 | 1597.363 | 4 | BK7 | Spiegel |
| 8 | 300.788 | 42 | | |
| 9 | 23.668 | 5 | BK7 | |
| 10 | 138.903 | 4.401 | | |

8. Objektiv nach dem Patentanspruch 1, gekennzeichnet durch folgende auf Brennweite f = 100 und Wellenlänge 650 nm bezogene Daten:

| Fläche Nr. | Radius | Abstand | Glasart | |
|---|---|---|---|---|
| 1 | 159.887 | 7.2 | BK7 | |
| 2 | 466.807 | 34 | | |
| 3 | -146.918 | 8 | BK7 | |
| 4 | -211.656 | -8 | BK7 | Spiegel |
| 5 | -146.918 | -41 | | |
| 6 | 1899.251 | -4 | BK7 | |
| 7 | -5010.722 | 4 | BK7 | Spiegel |
| 8 | 1899.251 | 41 | | |
| 9 | 23.826 | 2 | SF10 | |
| 10 | 16.515 | 4 | BK7 | |
| 11 | 106.456 | 4.441 | | |

FIG. 1

FIG. 2

FIG. 3

FIG. 4